# EUROPÄISCHE PATENTSCHRIFT

(11) **EP 3 414 151 B1**
(45) Veröffentlichungstag und Bekanntmachung des Hinweises auf die Patenterteilung: **08.04.2020**
(21) Anmeldenummer: 17705093.7
(22) Anmeldetag: 10.02.2017
(51) Int. Cl.: B62M 3/06, B62M 3/00, B62M 9/08

(54) **GETRIEBE**
GEARBOX
TRANSMISSION

(30) Priorität: 12.02.2016 DE 102016001660; 22.04.2016 DE 102016004888
(43) Veröffentlichungstag der Anmeldung: 19.12.2018
(73) Patentinhaber: Möve Bikes GmbH, 99974 Mühlhausen (DE)
(72) Erfinder: SPRÖTE, Tobias, 99974 Mühlhausen (DE); ROCHLITZER, Marcus, 99974 Mühlhausen (DE); SCHUBERT, Stefan, 99974 Mühlhausen (DE); WASSMANN, Frederik, 37081 Göttingen (DE); FEINDT, Sixtus Godehard, 99974 Mühlhausen (DE)
(74) Vertreter: Fritzsche, Thomas
(86) Internationale Anmeldenummer: PCT/EP2017/053082
(87) Internationale Veröffentlichungsnummer: WO 2017/137609

(56) Entgegenhaltungen:
- US-A- 4 125 239
- US-B1- 6 802 798

## Beschreibung

Die Erfindung betrifft ein Getriebe gemäß der im Oberbegriff des Anspruchs 1 stehenden Merkmale.

Derartige Getriebe können insbesondere in Fahrrädern verbaut sein und sorgen für eine Vergrößerung des Drehmomentes durch die vom Radfahrer eingeleitete Kraft. Bei dieser Anwendung wird das Gehäuse des Getriebes an ein Rahmenbauteil adaptiert und das Kraftübertragungsmittel, zum Beispiel ein Zahnkranz, überträgt das vom Radfahrer erzeugte Drehmoment über eine Kette auf das Hinterrad. Das erfindungsgemäße Getriebe kann jedoch ebenso beispielsweise an Windkraftanlagen mit senkrecht stehenden Rotationsachsen vorgesehen sein.

Die DE 295 00 144 U1 offenbart eine insbesondere für Fahrräder geeignete Antriebsvorrichtung, die einseitig mit einer der beiden Tretkurbeln zusammenwirkt und einen totpunktfreien Antrieb mit beidseitig gleicher Bewegung, jeweils nur um eine halbe Periode versetzt, ermöglichen soll. Als nachteilig hat sich bei dieser Vorrichtung herausgestellt, dass der Drehmomentverlauf und damit der Wirkungsgrad kaum verbessert ist.

Einen Stand der Technik bildet die DE 10 2010 033 211 B4 mit einem Fahrradgetriebe, bei dem das Sonnenrad, das Planetenrad und die Triebkurbel innerhalb eines gemeinsamen Kurbelgehäuse angeordnet sind und sich der Kurbelarm mittels einer Führungsrolle an einer ebenfalls im Kurbelgehäuse angeordneten Führungsschiene abstützt. Die Triebkurbel greift von zwei Seiten an einem Kurbelarmkopf des Kurbelarmes an und nimmt dabei eventuell vorhandene Kippmomente auf. Die Führungsrolle dagegen läuft frei und mit seitlichem Spiel auf der Führungsschiene ab, da andernfalls die Lagerung des Kurbelarmkopfes überbestimmt wäre. Als nachteilig hat sich bei dem bekannten Getriebe herausgestellt, dass das Treten aufgrund der frei laufenden Führungsrolle als ruckartig empfunden wird und außerdem die bekannte Bauweise mit einem zweiseitig gelagerten Kurbelarmkopf zu einem großen Q-Faktor führt. Der Q-Faktor bezeichnet beim Fahrrad den seitlichen Abstand der äußeren Flächen der beiden Tretkurbeln zueinander. Je größer der Q-Faktor ist, desto weiter sind die Pedale auseinander. Dies erhöht das Risiko, dass in engen und schnell gefahrenen Kurven das kurveninnere Pedal aufsetzt und ein zu großer Q-Faktor aus ergonomischer Sicht gesundheitsschädlich ist. Auch in anderen Bereichen der Technik ist es erstrebenwert, ein möglichst in axialer Richtung der Zentralwelle kompakt bauendes Getriebe realisieren zu können.

Weitere relevante Dokumente der Stand der Technik sind US 6 802 798 B1, das nächstliegend , und US 4 125 239 A.

Folglich lag der Erfindung die Aufgabe zugrunde, ein Getriebe bereitzustellen, dass in axialer Richtung der Zentralwelle möglichst kompakte Abmessungen aufweist und dessen rotierende Antriebskurbel möglichst spielfrei geführt ist.

Die Aufgabe wird erfindungsgemäß mit dem kennzeichnenden Merkmal des Anspruchs 1 gelöst. Unter einem Pendelarm wird ein starres Bauteil verstanden, welches ausgehend von einer Mittellage mit einem Ende in zwei Richtungen um einen Lagerpunkt schwenkt. Hieraus resultiert der Vorteil, dass auf kinematisch zwar optimale aber im Betrieb anfällige Dreh-Schub-Gelenke verzichtet werden kann und alle eingesetzten Lager als Drehlager ausgeführt sein können.

Das erfindungsgemäße Getriebe ermöglicht die Bildung eines maximalen Momentes durch Zuhilfenahme einer Kraftübersetzung bei gleichzeitiger Führung eines krafteinleitenden Elementes längs einer homogenen Bahn. Das krafteinleitende Element kann beispielsweise der Fuß eines Radfahrers sein. Die Homogenität resultiert sowohl aus der durchgehend konvexen Bahnform als auch der Reduzierung von absoluten Beschleunigungen im Bereich des krafteinleitenden Elementes. Das Verhältnis zwischen Maximum und Minimum der Absolutgeschwindigkeiten überschreitet in keinem Bahnpunkt den Wert 2,5.

Das erste und/oder ein gegebenenfalls. vorhandenes zweites Sonnenrad führt vorzugsweise mit dem damit zusammenwirkenden Planetenrad zu einem Übersetzungsverhältnis von 1:2. Ein grundsätzlich auch in der Praxis sinnvolles Übersetzungsverhältnis kann alternativ 1:4 betragen.

In dem erfindungsgemäßen Getriebe als Gesamtsystem dient die Antriebskurbel, vorzugsweise in einer Lagerachse eines Pedal-Lagers P, als Antrieb und die Trägerplatte als Abtrieb.

Vorteilhafterweise ist der Pendelarm mit seinem ersten Ende mittels eines Pendelarm-Trägerplatte-Lagers drehbeweglich an der Trägerplatte und an seinem zweiten Ende mittels eines Pendelarm-Antriebskurbel-Lagers drehbeweglich an der Antriebskurbel gelagert. Dabei bilden das Planetenrad-Lager, das Antriebskurbel-Kurbelarm-Lager, das Pendelarm-Antriebskurbel-Lager und das Pendelarm-Trägerplatte-Lager innerhalb des Gesamtsystems des Getriebes ein Viergelenk, wobei das Viergelenk bei dieser Betrachtung von dem kontinuierlich umlaufenden Kurbelarm angetrieben ist. Der Kurbelarm weist stets die kleinste Länge innerhalb des Viergelenks auf. Der Abtrieb des Viergelenks erfolgt mittels des Pendelarms, der eine schwingende Bewegung um das Pendelarm-Trägerplatte-Lager ausführt. Der Kurbelarm und der Pendelarm sind über eine Koppel miteinander verbunden, welche aus einem Abschnitt der Antriebskurbel zwischen dessen Antriebskurbel-Kurbelarm-Lager und dem Pendelarm-Antriebskurbel-Lager gebildet ist. Sowohl der Kurbelarm als auch der Pendelarm sind drehbar an der Trägerplatte gelagert, wobei der Kurbelarm fest mit einer Welle des umlaufenden Planetenrades verbunden ist. Das Pendelarm-Antriebskurbel-Lager vollzieht anstelle einer linearen Bewegung eines Dreh-Schub-Gelenkes lediglich eine angenähert lineare Bewegung auf einer Kreisbahn mit sehr großem Radius.

Es hat sich als besonders günstig erwiesen, wenn der Kurbelarm und der Pendelarm auf einer gemeinsamen Seite der Antriebskurbel angeordnet sind. Die Antriebskurbel liegt somit bezüglich des Getriebes in axialer Richtung der Zentralwelle außen, was zu einem besonders geringen Q-Faktor beiträgt. Vorteilhafterweise sind dann auch der Kurbelarm und der Pendelarm in axialer Richtung der Zentralwelle zwischen der Trägerplatte und der Antriebskurbel angeordnet.

Vorzugsweise ist bei einer vollständigen Umdrehung der Trägerplatte von dem Pendelarm um das Pendelarm-Trägerplatte-Lager ein maximaler Schwenkwinkel von 25° bis 50° überstrichen. Bei diesem maximalen Schwenkwinkeln arbeitet das Getriebe besonders effektiv.

Zweckmäßigerweise nimmt das Pendelarm-Trägerplatte-Lager eine Position auf einer Mittelsenkrechten ein, welche senkrecht auf einer zwischen der Lagerachse des Pendelarm-Antriebskurbel-Lagers in dessen 0° und 90° Stellung verlaufenden Verbindungslinie steht. Die beiden Lagerachsen liegen somit in ihren Endlagen auf einer Geraden, welche die Drehachse des Getriebes schneidet. Das Viergelenk stellt dann eine zentrische Kurbelschwinge dar.

Gemäß einer besonders vorteilhaften Ausführungsform ist/sind das Pendelarm-Trägerplatte-Lager und/oder das Antriebskurbel-Kurbelarm-Lager innerhalb eines Außenumfangs des Kraftübertragungsmittels angeordnet. Hierdurch wird in radialer Richtung des Kraftübertragungsmittels eine besonders kompakte Bauweise erzielt, bei welcher unabhängig von der Stellung der Antriebskurbel -abgesehen von dieser- kein Bauteil über das Kraftübertragungsmittel hinausragt, so dass beispielsweise konventionelle Kettenkästen oder andere Einhausungen für das Kraftübertragungsmittel vorgesehen werden können, ohne dass das Kraftübertragungsmittel mit diesen kollidiert.

Der Abstand zwischen dem Pendelarm-Trägerplatte-Lager und dem Pendelarm-Antriebskurbel-Lager kann größer als der Abstand zwischen dem Pendelarm-Antriebskurbel-Lager und dem Antriebskurbel-Kurbelarm-Lager ausgeführt sein. Für ein umlauffähiges Getriebe sollten darüber hinaus die nachfolgenden Voraussetzungen vorliegen:
g > d > c
d > b > c
s ≠ 0

- mit g:: Abstand zwischen Lagerachse Planetenrad-Lager (A₀) und Lagerachse Pendelarm-Trägerplatte-Lager (B₀).
- mit d:: Abstand zwischen Lagerachse Pendelarm-Trägerplatte-Lager (B₀) und Lagerachse Pendelarm-Antriebskurbel-Lager (B, B').
- mit c:: Abstand zwischen Lagerachse Planetenrad-Lager (A₀) und Lagerachse Antriebskurbel-Kurbelarm-Lager (A).
- mit b:: Abstand zwischen Lagerachse Antriebskurbel-Kurbelarm-Lager (A) und Lagerachse Pendelarm-Antriebskurbel-Lager (B, B').
- mit s:: Länge der durch die Lagerachse Pendelarm-Trägerplatte-Lager (B₀) verlaufenden Mittelsenkrechten, welche senkrecht auf einer zwischen der Lagerachse (B, B') des Pendelarm-Antriebskurbel-Lagers in dessen 0° und 90° Stellung verlaufenden Verbindungslinie steht.

Unter dem Begriff "Lagerachse" wird die Position der Drehachse des jeweiligen Lagers unabhängig von dessen Dimensionierung oder sonstigen konstruktiven Beschaffenheit verstanden.

Vorzugsweise spannen das Pendelarm-Trägerplatte-Lager, das Pendelarm-Antriebskurbel-Lager und das Antriebskurbel-Kurbelarm-Lager stets ein Dreieck auf.

Günstigerweise ist/sind das Planetenrad-Lager und/oder das Antriebskurbel-Kurbelarm-Lager und/oder das Pendelarm-Trägerplatte-Lager und/oder das Pendelarm-Antriebskurbel-Lager jeweils separat gegen Schmutz und Spritzwasser abgedichtet. Die Abdichtung der vorstehend genannten, außenliegenden Lager kann mittels berührender Lippendichtungen erfolgen. Das oder die Zentralwellenlager ist/sind vorzugsweise durch eine Abdeckplatte (Spaltdichtung) abgedichtet. Hierdurch lässt sich eine effektive Dichtwirkung erzielen. Darüber hinaus kann auf großräumige Umhüllungen beispielsweise mittels Faltenbalge verzichtet werden. Diese sind einerseits anfällig gegen Beschädigungen und stören andererseits die optische Anmutung des Getriebes.

Vorteilhafterweise ist das erste Sonnenrad an einer ersten Seite des Rahmenelementes angeordnet. Diese Einbaulage korrespondiert beispielsweise mit den konventionell eingebauten Tretlagern eines Fahrrades.

Ganz besonders bevorzugt ist es, insbesondere bei einer Anwendung des erfindungsgemäßen Getriebes an einem Fahrrad, wenn an einer bezüglich des Rahmenelementes der ersten Seite gegenüberliegenden, zweiten Seite ein zweites Sonnenrad vorgesehen ist, welches mit einer gegenüber dem Rahmenelement rotierenden zweiten Getriebeanordnung zusammenwirkt, wobei die zweite Getriebeanordnung um 180° zu der ersten Getriebeanordnung versetzt ist und eine Trägerplatte umfasst,
- deren erster Abschnitt drehfest mit der Zentralwelle verbunden und an deren zweitem Abschnitt ein Planetenrad mittels eines Planetenrad-Lagers gelagert ist, das Planetenrad das zweite Sonnenrad kämmt und an dem Planetenrad starr ein Kurbelarm angreift, sowie
- eine Antriebskurbel, an welcher der Kurbelarm mittels eines Antriebskurbel-Kurbelarm-Lagers drehgelenkig gelagert und welche über einen Pendelarm gegenüber der Trägerplatte abgestützt ist.

Hierdurch wird ein Getriebe bereitgestellt, welches ausgehend von einer mittig angeordneten Zentralwelle auf jeder Seite ein Sonnenrad und eine das Sonnenrad umkreisende, symmetrische Getriebeanordnung aufweist. Das ortsfest zur Zentralwelle angeordnete Kraftübertragungsmittel braucht lediglich auf einer Seite des Rahmenelementes angeordnet zu sein.

Vorzugsweise ist/sind die Zentralwelle und/oder das mindestens eine Zentralwellenlager konzentrisch innerhalb des ersten und/oder zweiten Sonnenrades angeordnet. Der Vorteil dieser Ausführungsform liegt darin, dass das Getriebe in axialer Richtung der Zentralwelle besonders kompakte Abmessungen aufweist.

Das erste und zweite Sonnenrad können monolithisch hergestellt sein. Gemäß einer bevorzugten Ausführungsform sind das erste und zweite Sonnenrad jeweils als Zahnrad ausgebildet. In diesem Fall bedeutet eine monolithische Herstellung, dass die Zahnräder von dem ersten und dem zweiten Sonnenrad mittels eines Hohlzylinders fest miteinander verbunden sind und üblicherweise die Verzahnung beider miteinander verbundener Zahnräder in einem gemeinsamen formgebenden Arbeitsschritt entsteht. Hierdurch fluchten die Zähne des ersten Sonnenrades möglichst exakt mit den Zähnen des zweiten Sonnenrades. Das die miteinander verbundenen Zahnräder aufnehmende Rahmenelement weist in seinem unteren Abschnitt eine Oberschale und eine Unterschale auf, die in zusammengefügtem Zustand mit einer zu dem Hohlzylinder komplementären Form ausgebildet ist. Zur Montage wird der Hohlzylinder zunächst in die Oberschale eingelegt und anschließend die Unterschale mit der Oberschale verbunden, insbesondere verschraubt. Grundsätzlich ist der Hohlzylinder klemmend von der Oberschale und der Unterschale gehalten.

Vorteilhafterweise ist das Kraftübertragungsmittel ein Zahnkranz, der vorzugsweise mit einer Kette oder einem Zahnriemen zusammenwirkt beziehungsweise in diese(n) eingreift. Alternativ hierzu ist es auch möglich, ein Kraftübertragungsmittel in Form eines Antriebsrades vorzusehen, welches ohne Formschlusselemente beispielsweise einen Riemen antreibt.

Zweckmäßigerweise ist der Zahnkranz an der Trägerplatte der ersten und/oder zweiten Getriebeanordnung befestigt. Hierdurch ergibt sich eine in axialer Richtung der Zentralwelle kompakte Bauweise des Getriebes, da für die Trägerplatte ohnehin ein entsprechender Bauraum vorzuhalten ist und der Zahnkranz ebenfalls beabstandet zu der nächstliegenden ersten Seite des Rahmenelement angeordnet ist, um einen freien Lauf der Kette zu ermöglichen.

Zum besseren Verständnis wird die Erfindung nachfolgend anhand von vier Figuren erläutert. Es zeigen die
- **Fig. 1:**: eine perspektivische Ansicht auf das Getriebe mit Antriebskurbeln in der 0°-Stellung;
- **Fig. 2:**: eine Seitenansicht auf das Getriebe mit Antriebskurbeln in der 0°-Stellung;
- **Fig. 3:**: eine Seitenansicht auf das Getriebe mit Antriebskurbeln in der 90°-Stellung und
- **Fig. 4:**: einen Längsschnitt durch das Getriebe entsprechend der Schnittebene A:A in Fig. 2.

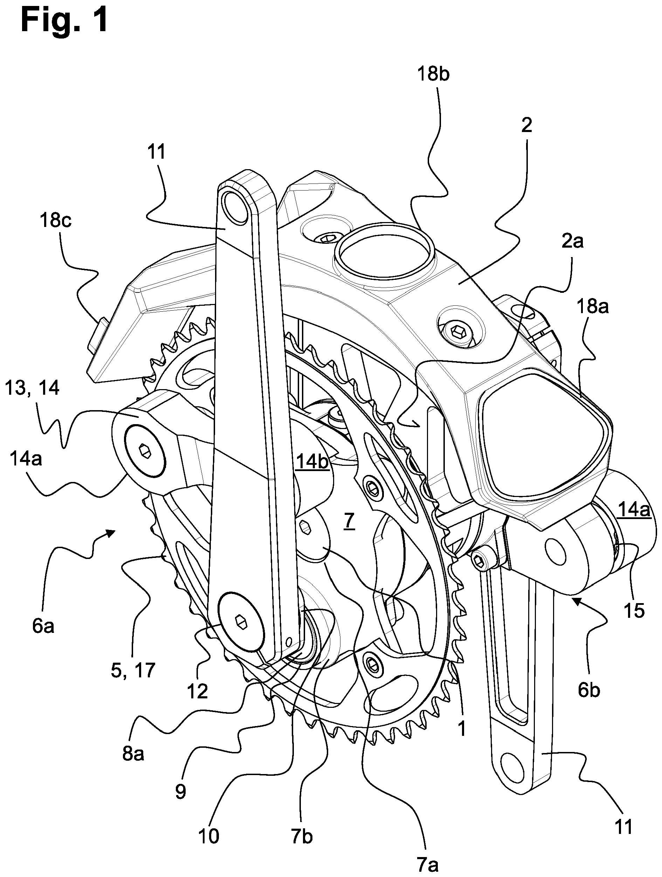

Die Fig. 1 zeigt eine perspektivische Ansicht des erfindungsgemäßen Getriebes in Einbaulage, welches mittels eines Rahmenelementes 2 zum Beispiel mit einem hier nicht gezeigten Fahrradrahmen verbindbar ist. Hierfür weist das Rahmenelement 2 drei Anschlussflansche 18a, 18b, 18c zum Anschluss an ein Vorderrohr (Anschlussflansch 18a), ein Sattelrohr (Anschlussflansch 18b) und einen Hinterbau (Anschlussflansch 18c) auf.

Auf einer ersten Seite 2a des Rahmenelementes 2 ist eine erste Getriebeanordnung 6a und auf der gegenüberliegenden, zweiten Seite 2b eine zweite Getriebeanordnung 6b angeordnet. Die benachbart zur zweiten Seite 2b befindliche, zweite Getriebeanordnung 6b liegt in der Bildebene hinter dem Rahmenelement 2 und ist in großen Teilen durch dieses verdeckt.

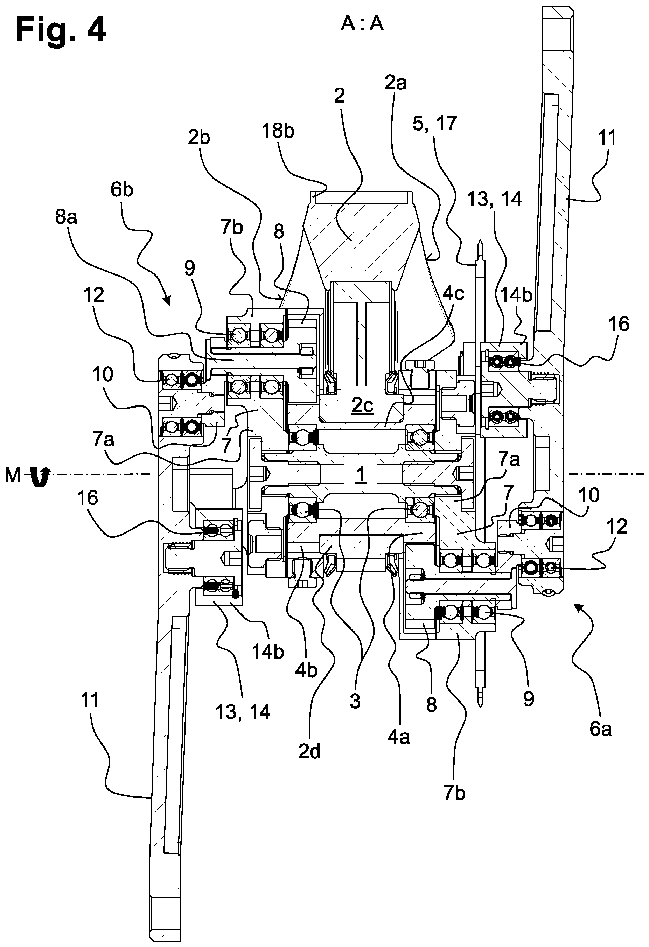

Die erste und zweite Getriebeanordnung 6a, 6b wirken auf eine Zentralwelle 1, die quer durch das Rahmenelement 2 verläuft und dessen vordere Stirnseite sichtbar ist. Die Zentralwelle 1 definiert die in Fig. 4 eingezeichnete Drehachse M des Getriebes (Gesamtsystem).

Die zweite Getriebeanordnung 6b ist, bezogen auf den Drehsinn der Zentralwelle 1, um 180° versetzt zu der ersten Getriebeanordnung 6a ausgerichtet, so dass eine Antriebskurbel 11 der ersten Getriebeanordnung 6a nach oben und eine Antriebskurbel 11 der zweiten Getriebeanordnung 6b nach unten weist.

An beiden axialen Endabschnitten der Zentralwelle 1 ist drehfest eine Trägerplatte 7 angebracht, welche im Betrieb des Getriebes zusammen mit der Zentralwelle 1 eine kreisförmige Drehbewegung ausführt. Die Verbindung der Trägerplatte 7 mit der Zentralwelle 1 erfolgt in einem zentrisch in der Trägerplatte 7 angeordneten ersten Abschnitt 7a. In radialer Richtung der Trägerplatte 7 ist außenliegend ein zweiter Abschnitt 7b vorgesehen, welcher ein Planetenrad 8 (siehe Fig. 4) trägt, das mittels eines Planetenrad-Lagers 9 gegenüber der Trägerplatte 7 drehbar gelagert ist. Das Planetenrad-Lager 9 greift an einer zylindrisch geformten Welle 8a des Planetenrades 8 an.

An dem bezüglich des Rahmenelementes 2 äußeren Ende der Welle 8a ist ein Kurbelarm 10 entweder drehfest angebracht oder integral, einstückig ausgeformt. Der Kurbelarm 10 steht in radialer Richtung gegenüber der Welle 8a vor und greift mittels eines Antriebskurbel-Kurbelarm-Lagers 12 drehbeweglich an der Antriebskurbel 11 an.

Mit der Trägerplatte 7 ist außerdem ein kinematisches Kopplungsmittel 13 in Form eines Pendelarms 14 drehbeweglich verbunden. Hierfür ist zwischen der Trägerplatte 7 und einem ersten Ende 14a des Pendelarmes 14 ein Pendelarm-Trägerplatte-Lager 15 vorgesehen, welches besonders gut in der Darstellung gemäß Fig. 4 zu sehen ist. Das dem ersten Ende 14a gegenüberliegende, zweite Ende 14b greift mittels eines Pendelarm-Antriebskurbel-Lagers 16 drehbar an der dem Rahmenelement 2 zugewandten Seite der Antriebskurbel 11 an (vergleiche ebenfalls Fig. 4).

Die Trägerplatte 7 der ersten Getriebeanordnung 6a ist in Umfangsrichtung vollständig von einem Kraftübertragungsmittel 5 umgeben, das bei dem gezeigten Ausführungsbeispiel eines Fahrradgetriebes als Zahnkranz 17 ausgebildet ist. Der Zahnkranz 17 ist dabei konzentrisch zu der Zentralwelle 1 ausgerichtet.

Die Krafteinleitung des Gesamtsystems erfolgt über die zwei Antriebskurbeln 11 jeweils der ersten und zweiten Getriebeanordnung 6a, 6b, welche das Getriebe in axialer Richtung der Zentralwelle 1 nach außen begrenzen. Die Figuren 1, 2 und 4 zeigen die Antriebskurbeln 11 und die jeweils zugehörige Getriebeanordnung 6a, 6b in einer 0°-Stellung, in welcher die Antriebskurbel 11 und der zugehörige Kurbelarm 10 gestreckt sind, das heißt der Kurbelarm 10 ausgehend von der Welle 8a des Planetenrades 8 radial nach innen in Richtung der Zentralwelle 1 zeigt. Das freie Ende der Antriebskurbel 11 befindet sich hierdurch in einer maximal ausgefahrenen Position.

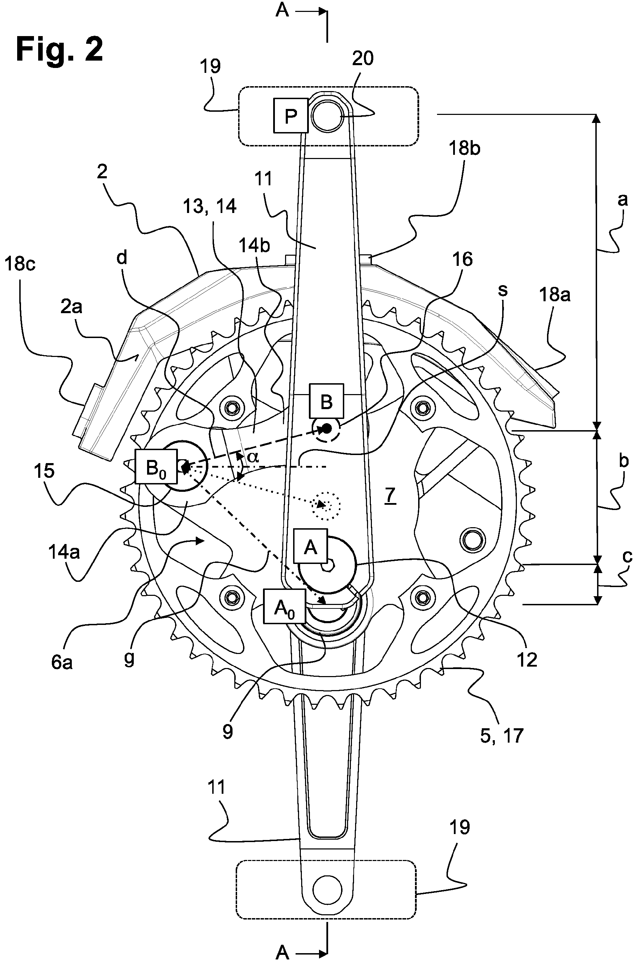

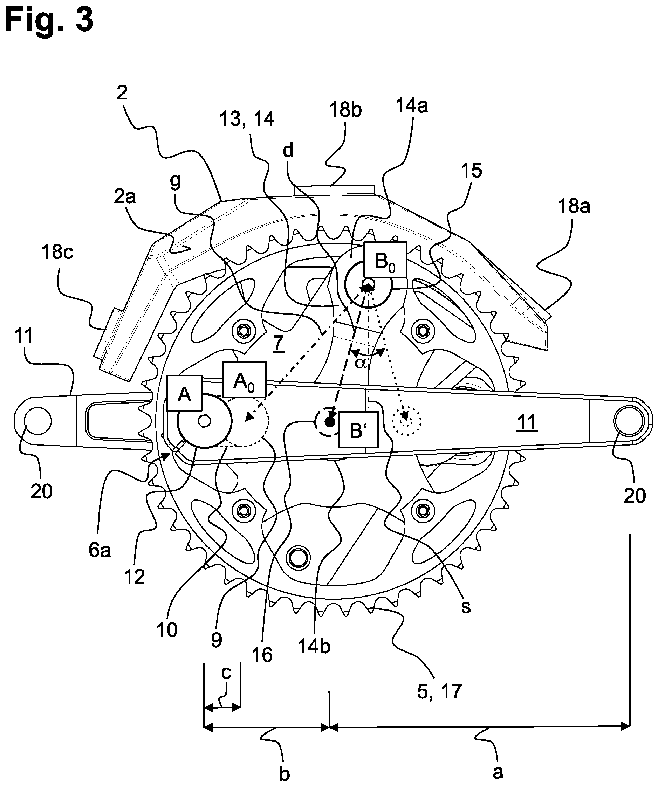

Anhand der Fig. 2 und 3 sind die 0°-Stellung (Fig. 2) und die 90°-Stellung (Fig. 3) der Antriebskurbeln 11 in einer Seitenansicht des Getriebes gegenübergestellt, wobei aus Vereinfachungsgründen die Bezeichnungen und Zusammenhänge im Wesentlichen anhand der ersten Getriebeanordnung 6a erläutert werden.

An dem freien Ende der Antriebskurbeln 11 ist in Fig. 2 beispielhaft jeweils ein Pedal 19 befestigt, welches mittels eines Pedal-Lagers 20 gegenüber der zugehörigen Antriebskurbel 11 drehbar gelagert ist. Das Pedal-Lager 20 weist eine bezüglich der Antriebkurbel ortsfeste Lagerachse P auf.

Der Pendelarm 14 ist an dem ersten Ende 14a mittels des Pendelarm-Trägerplatte-Lagers 15 an der Trägerplatte 7 befestigt und schwenkt bei umlaufendem Getriebe um eine Lagerachse B₀. Mit dem zweiten Ende 14b ist der Pendelarm 14 über das Pendelarm-Antriebskurbel-Lager 16 drehbar mit der Antriebskurbel 11 verbunden. Das Pendelarm-Antriebskurbel-Lager 16 weist eine Lagerachse B, B' auf, wobei die Endlage der Lagerachse B mit der in Fig. 2 gezeigten 0°-Stellung und die Endlage der Lagerachse B' mit der in Fig. 3 gezeigten 90°-Stellung korrespondiert. Die jeweils andere Endlage der Lagerachse B', B wird durch eine Lageänderung der Antriebskurbel 11 erreicht und ist durch eine punktierte Linie angedeutet. Der Pendelarm 14 überstreicht an der Lagerachse B₀ zwischen den Endlagen der Lagerachse B, B' einen Schwenkwinkel α, der vorzugsweise zwischen 25° und 50° betragen kann.

Die Lagerachse P und die Lagerachse B, B' sind in einem Abstand a zueinander beabstandet. Der Abstand a ist unabhängig von der Lage der ersten oder zweiten Getriebeanordnung 6a, 6b stets konstant. Bei einem an einem Fahrrad verbauten Getriebe beträgt der Abstand a bevorzugt 100 mm bis 200 mm, besonders bevorzugt 130 mm bis 160 mm und ganz besonders bevorzugt 145 mm bis 155 mm.

Der Kurbelarm 10 ist mittels des Antriebskurbel-Kurbelarm-Lagers 12 an der Antriebskurbel 11 und gleichzeitig an dem Planetenrad-Lager 9 jeweils drehbar angebracht, wobei das Antriebskurbel-Kurbelarm-Lager 12 eine bezüglich der Antriebskurbel 11 ortsfeste Lagerachse A und das Planetenrad-Lager 9 eine bezüglich der Trägerplatte 7 ortsfeste Lagerachse A₀ aufweist. Um die Lagerachse A₀ dreht die Welle 8a des Planetenrades 8.

Die Lagerachse B, B' und die Lagerachse A sind in einem Abstand b zueinander beabstandet. Der Abstand b ist unabhängig von der Lage der ersten und zweiten Getriebeanordnung 6a, 6b stets konstant.

In der bevorzugten und gezeigten Ausführungsform des Getriebes befindet sich zur Erreichung eines maximalen Drehmomentes in der 90°-Stellung die Lagerachse B' genau in der Drehachse M (siehe Fig. 4) des Gesamtsystems. Ein Versatz der Lagerachse B' in Richtung der Lagerachse A bewirkt in der 90°-Stellung entsprechend Fig. 3 ein negatives Drehmoment, welches der eigentlichen Drehrichtung des Getriebes zum Beispiel im Bereich der Zentralwelle 1 entgegenwirkt und möglichst zu vermeiden ist. Ein Versatz der Lagerachse B' in Richtung der Lagerachse P bewirkt zwar ein zusätzliches vortriebswirksames Drehmoment, vergrößert jedoch die baulichen Abmessungen des Getriebes. Erfindungsgemäß soll der Versatz der Lagerachse B' zu der Drehachse M in beide Richtungen kleiner als 10 % des Abstandes b sein.

Exakt zwischen der Lagerachse B (Fig. 2) und der Lagerachse B' (Fig. 3) verläuft quer zur axialen Erstreckung der Antriebskurbel 11 eine Mittelsenkrechte s, auf welcher die Lagerachse B₀ des Pendelarm-Trägerplatte-Lagers 15 angeordnet ist. Die Mittelsenkrechte s weist grundsätzlich einen Wert größer 0 auf, das heißt, es ist immer ein Offset der Lagerachse B₀ zu der Antriebskurbel 11 vorhanden. Unter dieser Voraussetzung ist zwischen der Lagerachse B und der Lagerachse B₀ auch stets ein Abstand d vorhanden.

Die beiden Lagerachsen A, A₀ sind in einem Abstand c zueinander ausgerichtet, welcher dem Betrag nach in der 0°-Stellung und in der 90°-Stellung gleich ist. Allerdings haben die Lagerachsen A, A₀ ausgehend von der 0°-Stellung entsprechend Fig. 2 im Vergleich zu der 90°-Stellung entsprechend Fig. 3 ihre Position vertauscht. Dieses führt dazu, dass die Antriebskurbel 11 in der 0°-Stellung eine bezüglich der Drehachse M ausgeschobene Position einnimmt, bei welcher sich die Abstände a, b, c addieren. In der 90°-Position dagegen ist die Addition der Abstände a, b, c um den Abstand c verringert und die Antriebskurbel 11 nimmt bezüglich der Drehachse M (siehe Fig. 4) eine eingezogene Position ein.

Die Lagerachse A₀ ist zu der Lagerachse B₀ in einem Abstand g ausgerichtet, der aufgrund der ortsfesten Anordnung des Planetenrad-Lagers 9 und des Pendelarm-Trägerplatte-Lagers 15 jeweils an der Trägerplatte 7 unabhängig von der Lage der ersten und zweiten Getriebeanordnung 6a, 6b konstant ist. Der Abstand g sollte dem Betrag nach größer als der Abstand b, c oder d sein.

Der Längsschnitt der Fig. 4 zeigt auch das bezüglich des Rahmenelementes 2 feststehende erste und zweite Sonnenrad 4a, 4b, wobei das erste Sonnenrad 4a auf der ersten Seite 2a des Rahmenelementes 2 und das zweite Sonnenrad 4b auf der gegenüberliegenden, zweiten Seite 2b angeordnet ist. Das Sonnenrad 4a ist über einen Hohlzylinder 4c mit dem Sonnenrad 4b fest verbunden, wobei die Sonnenräder 4a, 4b und der Hohlzylinder 4c als einstückige, integrale Baueinheit ausgeführt sind. Unter einer einstückig, integralen Baueinheit wird eine zerstörungsfrei nicht separierbare Verbindung verstanden. Das erste und zweite Sonnenrad 4a, 4b sind über den Hohlzylinder 4c klemmend mit dem Rahmenelement 2 verbunden. Hierfür weist das Rahmenelement 2 eine zumindest teilweise zu der Außenkontur des Hohlzylinders 4c komplementär geformte Oberschale 2c auf, welche in der Bildebene von oben an dem Hohlzylinder 4c anliegt. Von der anderen Seite stößt gegen den Hohlzylinder 4c eine Unterschale 2d, die mit der Oberschale 2c fest verspannt ist. Die axiale Erstreckung des Hohlzylinders 4c entspricht der Breite der Ober- und/oder Unterschale 2c, 2d, so dass das erste und zweite Sonnenrad 4a, 4b zwischen diesen exakt positioniert und während des Betriebes seitlich gehalten ist.

Innerhalb des Hohlzylinders 4c verläuft konzentrisch die Zentralwelle 1, welche im Bereich des ersten und zweiten Sonnenrades 4a, 4b mittels jeweils eines Zentralwellenlagers 3 drehbar gelagert ist. Aufgrund der in axialer Richtung der Zentralwelle 1 möglichst weit außen, koaxial innerhalb des ersten und zweiten Sonnenrades 4a, 4b angeordneten Zentralwellenlager 3 können besonders gut auf die Zentralwelle 1 wirkende Kippmomente aufgenommen werden.

### Bezugszeichenliste

- 1: Zentralwelle
- 2: Rahmenelement
- 2a: erste Seite Rahmenelement
- 2b: zweite Seite Rahmenelement
- 2c: Oberschale Rahmenelement
- 2d: Unterschale Rahmenelement
- 3: Zentralwellenlager
- 4a: erstes Sonnenrad
- 4b: zweites Sonnenrad
- 4c: Hohlzylinder
- 5: Kraftübertragungsmittel
- 6a: erste Getriebeanordnung
- 6b: zweite Getriebeanordnung
- 7: Trägerplatte
- 7a: erster Abschnitt Trägerplatte
- 7b: zweiter Abschnitt Trägerplatte
- 8: Planetenrad
- 8a: Welle Planetenrad
- 9: Planetenrad-Lager
- 10: Kurbelarm
- 11: Antriebskurbel
- 12: Antriebskurbel-Kurbelarm-Lager
- 13: kinematisches Kopplungsmittel
- 14: Pendelarm
- 14a: erstes Ende Pendelarm
- 14b: zweites Ende Pendelarm
- 15: Pendelarm-Trägerplatte-Lager
- 16: Pendelarm-Antriebskurbel-Lager
- 17: Zahnkranz
- 18a: Anschlussflansch Vorderrohr
- 18b: Anschlussflansch Sattelrohr
- 18c: Anschlussflansch Hinterbau
- 19: Pedal
- 20: Pedal-Lager

- α: Schwenkwinkel Pendelarm

- A₀: Lagerachse Planetenrad-Lager
- A: Lagerachse Antriebskurbel-Kurbelarm-Lager
- B₀: Lagerachse Pendelarm-Trägerplatte-Lager
- B: Lagerachse Pendelarm-Antriebskurbel-Lager, 0° Stellung
- B': Lagerachse Pendelarm-Antriebskurbel-Lager, 90° Stellung
- M: Drehachse Gesamtsystem
- P: Lagerachse Pedal-Lager

- a: Abstand B̅P̅, B̅'̅P̅
- b: Abstand A̅B̅, A̅B̅'̅
- c: Abstand A̅₀̅A̅
- d: Abstand B̅₀̅B̅, B̅₀̅B̅'̅
- g: Abstand A̅₀̅B̅₀̅
- s: Mittelsenkrechte

## Patentansprüche

1. Getriebe aufweisend
- eine Zentralwelle (1), welche gegenüber einem feststehenden Rahmenelement (2) mittels mindestens eines Zentralwellenlagers (3) drehbar gelagert ist,
- ein konzentrisch um die Zentralwelle (1) angeordnetes und fest mit dem Rahmenelement (2) verbundenes erstes Sonnenrad (4a),
- ein ortsfest zur Zentralwelle (1) angeordnetes Kraftübertragungsmittel (5) und
- mindestens eine erste, gegenüber dem Rahmenelement (2) rotierende Getriebeanordnung (6a), umfassend
- eine Trägerplatte (7), deren erster Abschnitt (7a) drehfest mit der Zentralwelle (1) verbunden und an deren zweitem Abschnitt (7b) ein Planetenrad (8) mittels eines Planetenrad-Lagers (9) gelagert ist, wobei das Planetenrad (8) das erste Sonnenrad (4a) kämmt und an dem Planetenrad (8) starr ein Kurbelarm (10) angreift, sowie
- eine Antriebskurbel (11), an welcher der Kurbelarm (10) mittels eines Antriebskurbel-Kurbelarm-Lagers (12) drehgelenkig gelagert ist und welche über ein kinematisches Kopplungsmittel (13) gegenüber der Trägerplatte (7) abgestützt ist,
wobei das kinematische Kopplungsmittel (13) ein Pendelarm (14) ist,
**dadurch gekennzeichnet, dass** der Pendelarm (14) mit seinem ersten Ende (14a) mittels eines Pendelarm-Trägerplatte-Lagers (15) drehbeweglich an der Trägerplatte (7) und an seinem zweiten Ende (14b) mittels eines Pendelarm-Antriebskurbel-Lagers (16) drehbeweglich an der Antriebskurbel (11) gelagert ist.

2. Getriebe nach Anspruch 1, **dadurch gekennzeichnet, dass** der Kurbelarm (10) und der Pendelarm (14) auf einer gemeinsamen Seite der Antriebskurbel (11) angeordnet sind.

3. Getriebe nach Anspruch 1 oder 2, **dadurch gekennzeichnet, dass** bei einer vollständigen Umdrehung der Trägerplatte (7) von dem Pendelarm (14) um das Pendelarm-Trägerplatte-Lager (15) ein maximaler Schwenkwinkel (α) von 25° bis 50° überstrichen ist.

4. Getriebe nach einem der Ansprüche 1 bis 3, **dadurch gekennzeichnet, dass** das Pendelarm-Trägerplatte-Lager (15) eine Position (B₀) auf einer Mittelsenkrechten (s) einnimmt, welche senkrecht auf einer zwischen der Lagerachse (B, B') des Pendelarm-Antriebskurbel-Lagers (16) in dessen 0° und 90° Stellung verlaufenden Verbindungslinie steht.

5. Getriebe nach einem der Ansprüche 1 bis 4, **dadurch gekennzeichnet, dass** das Pendelarm-Trägerplatte-Lager (15) und/oder das Antriebskurbel-Kurbelarm-Lager (12) innerhalb eines Außenumfangs des Kraftübertragungsmittels (5) angeordnet ist/sind.

6. Getriebe nach einem der Ansprüche 1 bis 5, **dadurch gekennzeichnet, dass** der Abstand (d) zwischen dem Pendelarm-Trägerplatte-Lager (15) und dem Pendelarm-Antriebskurbel-Lager (16) größer ist als der Abstand (b) zwischen dem Pendelarm-Antriebskurbel-Lager (16) und dem Antriebskurbel-Kurbelarm-Lager (12).

7. Getriebe nach einem der Ansprüche 1 bis 6, **dadurch gekennzeichnet, dass** das Pendelarm-Trägerplatte-Lager (15), das Pendelarm-Antriebskurbel-Lager (16) und das Antriebskurbel-Kurbelarm-Lager (12) stets ein Dreieck aufspannen.

8. Getriebe nach einem der Ansprüche 1 bis 7, **dadurch gekennzeichnet, dass** das Planetenrad-Lager (9) und/oder das Antriebskurbel-Kurbelarm-Lager (12) und/oder das Pendelarm-Trägerplatte-Lager (15) und/oder das Pendelarm-Antriebskurbel-Lager (16) jeweils separat abgedichtet ist/sind.

9. Getriebe nach einem der Ansprüche 1 bis 8, **dadurch gekennzeichnet, dass** das erste Sonnenrad (4a) an einer ersten Seite (2a) des Rahmenelementes (2) angeordnet ist.

10. Getriebe nach Anspruch 9, **dadurch gekennzeichnet, dass** an einer bezüglich des Rahmenelementes (2) der ersten Seite (2a) gegenüberliegenden, zweiten Seite (2b) ein zweites Sonnenrad (4b) vorgesehen ist, welches mit einer gegenüber dem Rahmenelement (2) rotierenden zweiten Getriebeanordnung (6b) zusammenwirkt, wobei die zweite Getriebeanordnung (6b) um 180° zu der ersten Getriebeanordnung (6a) versetzt ist und eine Trägerplatte (7) umfasst,
- deren erster Abschnitt (7a) drehfest mit der Zentralwelle (1) verbunden und an deren zweitem Abschnitt (7b) ein Planetenrad (8) mittels eines Planetenrad-Lagers (9) gelagert ist, das Planetenrad (8) das zweite Sonnenrad (4b) kämmt und an dem Planetenrad (8) starr ein Kurbelarm (10) angreift, sowie
- eine Antriebskurbel (11), an welcher der Kurbelarm (10) mittels eines Antriebskurbel-Kurbelarm-Lagers (12) drehgelenkig gelagert und welche über einen Pendelarm (14) gegenüber der Trägerplatte (7) abgestützt ist.

11. Getriebe nach Anspruch 10, **dadurch gekennzeichnet, dass** das erste und zweite Sonnenrad (4a, 4b) monolithisch hergestellt sind.

## Claims

1. A gearbox, having
- a central shaft (1), which is rotatably mounted relative to a stationary frame element (2) by means of at least one central shaft bearing (3);
- a first sun gear (4a) arranged concentrically around the central shaft (1) and fixedly connected to the frame element (2) ;
- a power transmission means (5) arranged in a stationary manner relative to the central shaft (1); and
- at least one first gearbox assembly (6a) rotating relative to the frame element (2), and comprising
- a support plate (7), the first portion (7a) of which is non-rotatably connected to the central shaft (1) and on the second portion (7b) of which a planetary gear (8) is mounted by means of a planetary gear bearing (9), wherein the planetary gear (8) meshes with the first sun gear (4a) and a crank arm (10) rigidly engages with the planetary gear (8); and
- a driving crank (11), on which the crank arm (10) is pivotally mounted by means of a driving crank/crank arm bearing (12) and which is supported relative to the support plate (7) by means of a kinematic coupling means (13),
wherein the kinematic coupling means (13) is a swing arm (14), **characterized in that** the swing arm (14) is rotatably mounted on the support plate (7) with its first end (14a) by means of a swing arm/support plate bearing (15) and is rotatably mounted on the driving crank (11) with its second end (14b) by means of a swing arm/driving crank bearing (16).

2. The gearbox according to claim 1, **characterized in that** the crank arm (10) and the swing arm (14) are arranged on a common side of the driving crank (11).

3. The gearbox according to claim 1 or 2, **characterized in that**, during a complete rotation of the support plate (7) of the swing arm (14) about the swing arm/support plate bearing (15), a maximum pivot angle (α) of 25° to 50° is covered.

4. The gearbox according to any one of claim 1 to 3, **characterized in that** the swing arm/support plate bearing (15) assumes a position (B₀) on a perpendicular bisector (s) which is perpendicular to a connecting line extending between the bearing axis (B, B') of the swing arm/driving crank bearing (16) in its 0° and 90° position.

5. The gearbox according to any one of claim 1 to 4, **characterized in that** the swing arm/support plate bearing (15) and/or the driving crank/crank arm bearing (12) is/are arranged within an outer periphery of the power transmission means (5).

6. The gearbox according to any one of claim 1 to 5, **characterized in that** the distance (d) between the swing arm/support plate bearing (15) and the swing arm/driving crank bearing (16) is greater than the distance (b) between the swing arm/driving crank bearing (16) and the driving crank/crank arm bearing (12).

7. The gearbox according to any one of claim 1 to 6, **characterized in that** the swing arm/support plate bearing (15), the swing arm/driving crank bearing (16) and the driving crank/crank arm bearing (12) always span a triangle.

8. The gearbox according to any one of claim 1 to 7, **characterized in that** the planetary gear bearing (9) and/or the driving crank/crank arm bearing (12) and/or the swing arm/support plate bearing (15) and/or the swing arm/driving crank bearing (16) is/are each sealed separately.

9. The gearbox according to any one of claim 1 to 8, **characterized in that** the first sun gear (4a) is arranged on a first side (2a) of the frame element (2).

10. The gearbox according to claim 9, **characterized in that**, on a second side (2b) opposite the first side (2a) relative to the frame element (2), a second sun gear (4b) is provided which cooperates with a second gearbox assembly (6b) rotating relative to the frame element (2), wherein the second gear assembly (6b) is offset by 180° from the first gear assembly (6a) and comprises a support plate (7),
- the first portion (7a) of which is non-rotatably connected to the central shaft (1) and on the second portion (7b) of which a planetary gear (8) is mounted by means of a planetary gear bearing (9), the planetary gear (8) meshing with the second sun gear (4b) and a crank arm (10) rigidly engaging with the planetary gear (8); and
- a driving crank (11) on which the crank arm (10) is pivotally mounted by means of a driving crank/crank arm bearing (12) and which is supported via a swing arm (14) relative to the support plate (7).

11. The gearbox according to claim 10, **characterized in that** the first and second sun gears (4a, 4b) are formed monolithically.

## Revendications

1. Transmission présentant
- un arbre central (1), lequel est monté rotatif par rapport à un élément de cadre (2) fixe au moyen d'au moins un palier d'arbre central (3),
- une première roue solaire (4a) agencée de manière concentrique autour de l'arbre de central (1) et reliée de manière fixe à l'élément de cadre (2),
- un moyen de transmission de force (5) agencé de manière stationnaire par rapport à l'arbre central (1) et
- au moins un premier ensemble transmission (6a) rotatif par rapport à l'élément de cadre (2), comprenant
- une plaque de support (7), dont la première section (7a) est reliée solidaire en rotation à l'arbre central (1) et une roue planétaire (8) est montée au moyen d'un palier de roue planétaire (9) au niveau de sa deuxième section (7b), dans laquelle la roue planétaire (8) s'engrène avec la première roue solaire (4a) et un bras de manivelle (10) agit de manière rigide sur la roue planétaire (8), ainsi que
- une manivelle d'entraînement (11), au niveau de laquelle le bras de manivelle (10) est monté articulé en rotation au moyen d'un palier de bras de manivelle de manivelle d'entraînement (12) et laquelle est soutenue par rapport à la plaque de support (7) par le biais d'un moyen d'accouplement cinématique (13),
dans laquelle le moyen d'accouplement cinématique (13) est un bras pendulaire (14),
**caractérisée en ce que** le bras pendulaire (14) est logé avec sa première extrémité (14a) au moyen d'un palier de plaque de support de bras pendulaire (15) mobile en rotation au niveau de la plaque de support (7) et à sa deuxième extrémité (14b) au moyen d'un palier de manivelle d'entraînement de bras pendulaire (16) mobile en rotation au niveau de la manivelle d'entraînement (11).

2. Transmission selon la revendication 1, **caractérisée en ce que** le bras de manivelle (10) et le bras pendulaire (14) sont agencés sur un côté commun de la manivelle d'entraînement (11).

3. Transmission selon la revendication 1 ou 2, **caractérisée en ce que** lors d'une rotation complète de la plaque de support (7) par le bras pendulaire (14) autour du palier de plaque de support de bras pendulaire (15), un angle de pivotement maximum (□) de 25° à 50° est balayé.

4. Transmission selon l'une quelconque des revendications 1 à 3, **caractérisée en ce que** le palier de plaque de support de bras pendulaire (15) adopte une position (B₀) sur une médiatrice (s), laquelle est perpendiculaire à une ligne de liaison s'étendant entre l'axe de palier (B, B') du palier de manivelle d'entraînement de bras pendulaire (16) dans sa position 0° et 90°.

5. Transmission selon l'une quelconque des revendications 1 à 4, **caractérisée en ce que** le palier de plaque de support de bras pendulaire (15) et/ou le palier de bras de manivelle de manivelle d'entraînement (12) est/sont agencés à l'intérieur d'une circonférence extérieure du moyen de transmission de force (5).

6. Transmission selon l'une quelconque des revendications 1 à 5, **caractérisée en ce que** la distance (d) entre le palier de plaque de support de bras pendulaire (15) et le palier de manivelle d'entraînement de bras pendulaire (16) est supérieure à la distance (b) entre le palier de manivelle d'entraînement de bras pendulaire (16) et le palier de bras de manivelle de manivelle d'entraînement (12).

7. Transmission selon l'une quelconque des revendications 1 à 6, **caractérisée en ce que** le palier de plaque de support de bras pendulaire (15), le palier de manivelle d'entraînement de bras pendulaire (16) et le palier de bras de manivelle de manivelle d'entraînement (12) définissent toujours un triangle.

8. Transmission selon l'une quelconque des revendications 1 à 7, **caractérisée en ce que** le palier de roue planétaire (9) et/ou le palier de bras de manivelle de manivelle d'entraînement (12) et/ou le palier de plaque de support de bras pendulaire (15) et/ou le palier de manivelle d'entraînement de bras pendulaire (16) est/sont rendu(s) étanche(s) respectivement de manière séparée.

9. Transmission selon l'une quelconque des revendications 1 à 8, **caractérisée en ce que** la première roue solaire (4a) est agencée au niveau d'un premier côté (2a) de l'élément de cadre (2).

10. Transmission selon la revendication 9, **caractérisée en ce qu'**une deuxième roue solidaire (4b) est prévue au niveau d'un deuxième côté (2b), opposé à l'élément de cadre (2) du premier côté (2a), laquelle coopère avec un deuxième ensemble transmission (6b) rotatif par rapport à l'élément de cadre (2), dans laquelle le deuxième ensemble transmission (6b) est décalé de 180° par rapport au premier ensemble de transmission (6a) et comprend une plaque de support (7),
- dont la première section (7a) est reliée solidaire en rotation à l'arbre central (1) et une roue planétaire (8) est montée au moyen d'un palier de roue planétaire (9) au niveau de sa deuxième section (7b), la roue planétaire (8) s'engrène avec la deuxième roue solaire (4b) et un bras de manivelle (10) agit de manière rigide sur la roue planétaire (8), ainsi que
- une manivelle d'entraînement (11), au niveau de laquelle le bras de manivelle (10) est monté articulé en rotation au moyen d'un palier de bras de manivelle de manivelle d'entraînement (12) et laquelle est soutenue par rapport à la plaque de support (7) par le biais d'un bras pendulaire (14),

11. Transmission selon la revendication 10, **caractérisée en ce que** la première et la deuxième roue solaire (4a, 4b) sont fabriquées de manière monolithique.
